# EUROPEAN PATENT APPLICATION

(11) **EP 0 707 262 A1**
(43) Date of publication of application: **17.04.1996**
(21) Application number: 95480133.8
(22) Date of filing: 22.09.1995
(51) Int. Cl.: G06F 7/50

(54) **A circuit which includes cells with high fanout requirements which has a reduced RC delay**

(30) Priority: 14.10.1994 US 323149
(71) Applicant: INTERNATIONAL BUSINESS MACHINES CORPORATION, Armonk, NY 10504 (US)
(72) Inventor: Bartling, Steven Craig, Austin, Texas 78750 (US)
(74) Representative: Schuffenecker, Thierry

(57) **Abstract**

A circuit is provided that reduces the RC delay due to the high fanout requirements of a particular cell in the circuit. The reduction is accomplished by providing a copy of a cell which has the high fanout requirements and then utilizing that copy to drive a cell which is part of a faster path in the circuit. In so doing, the fanout required for the various functions of the circuit is greatly reduced. The circuit provides for significant advantages as the size of the circuit, such as an adder or the like increases.

## Description

### FIELD OF THE INVENTION

The present invention relates generally to integrated circuits and more particularly to an improvement in such integrated circuits to reduce the delay in a particular path thereof.

### BACKGROUND OF THE INVENTION

Integrated circuits are utilized in a variety of applications. Many of these integrated circuits have fanout requirements in particular paths. For example, a binary adder typically utilizes a binary carry lookahead structure to provide an optimal adder. However, the fanout requirements for the various functions of the lookahead structure can become correspondingly larger as the size of the adder increases.

What is meant by fanout is the number of gates or logical devices required to receive a given signal. The problem with having to fanout to given (n) number of logical devices is the resistance/capacitance (RC) delay comprised of the network of gates and transistors and the wires is used to connect them. Hence, there are two ways to reduce the RC delay, one is to minimize the resistance of the metal line connections of the adder (which is virtually impossible), or reduce the capacitance of the wire and capacitance of the gates and transistors connected to the wire.

To reduce the capacitance of the gates and transistors requires changing the physical characteristics of the logical devices that make up the adder. Although this can be an effective way to reduce the delay in the adder, as devices become smaller, this approach becomes less effective in affecting the RC delay.

For example, for a 128 bit adder, the fanout of the signals of the adder at each stage is as follows:
- Stage 1:: Propagate/Generate Fanout = 3
- Stage 2:: Group Propagate/Generate Fanout = 2, Carry Fanout = 2
- Stage 3:: Group Propagate/Generate Fanout = 4, Carry Fanout = 3
- Stage 4:: Group Propagate/Generate Fanout = 8, Carry Fanout = 5
- Stage 5:: Group Propagate/Generate Fanout = 16, Carry Fanout = 9
- Stage 6:: Group Propagate/Generate Fanout = 32, Carry Fanout = 17
- Stage 7:: Group Propagate/Generate Fanout = 64, Carry Fanout = 33
- Stage 8:: Group Propagate/Generate Fanout = 1, Carry Fanout = 65
- Stage 9:: Carry Fanout = 1, (Carry generation for upper 64 bits)
- Stage 10:: Sum Fanout = 1 (Sum generation for upper 64 bits)

Accordingly, as is seen, in the fanout at each stage increases by a power of 2 for each stage of lookahead required.

Hence, what is needed is a circuit in which the RC delay is significantly less than conventional known circuits which have high fan-out requirements. The circuit must be simple to implement, cost effective and easily adaptable to existing process technologies. The present invention addresses such a need.

### SUMMARY OF THE INVENTION

A circuit is provided which includes a plurality of cells with a high fanout requirement and has a reduced RC delay. In a first aspect, the circuit includes a plurality of cells being separated into a first group of cells having a high fanout requirement, and a second group of cells having a higher speed capability. The circuit further includes a copy of an original cell from the first group of cells. The circuit also including means for coupling either the copy or the original cell to the second group.

In another aspect each of the plurality of cells comprises a lookahead cell.

In yet another aspect each of the plurality of cells comprises a carry cell.

In yet another aspect the circuit comprises an adder circuit.

In yet an additional aspect, the adder circuit comprises a carry lookahead binary adder circuit.

In yet another aspect the first group of lookahead cells are located on a power of two bit boundary of the circuit.

In another aspect the copy of at least one cell is coupled to a cell in the second group which is a subset of the fanout requirement.

### BRIEF DESCRIPTION OF THE DRAWINGS

Figure 1 is a block diagram of a first embodiment of a conventional 16 bit binary adder.

Figure 2 is a block diagram of a second embodiment of a conventional 16 bit binary adder.

Figure 3 is a block diagram of a first embodiment of a 16 bit binary adder in accordance with the present invention.

Figure 4 is a block diagram of a second embodiment of a 16 bit binary adder in accordance with the present invention.

Figure 5 is a block diagram of a third embodiment of a 16 bit binary adder in accordance with the present invention.

Figure 6A-6B are block diagrams of a portion of a 128 bit binary adder in accordance with the present invention.

### DESCRIPTION OF THE INVENTION

The present invention relates to the improvement in an integrated circuit that includes cells that have large fanout requirements. The following description is presented to enable one of ordinary skill in the art to make and use the invention and is provided in the context of a patent application and its requirements. Various modifications to the preferred embodiment will be readily apparent to those skilled in the art and the generic principles herein may be applied to other embodiments. Thus, the present invention is not intended to be limited to the embodiment shown but is to be accorded the widest scope consistent with the principles and features described herein.

The present invention is directed to reducing the RC delay inherent in a circuit in which a particular group of cells within the circuit have a large fanout requirement and high fanout. Particular cells must operate at a faster speed than permitted by the fanout requirement.
Accordingly, a copy of at least one of the group of cells which has the high fanout requirement is provided that allows for driving a subset of the original network of the device, this providing a lower fanout from the copy.

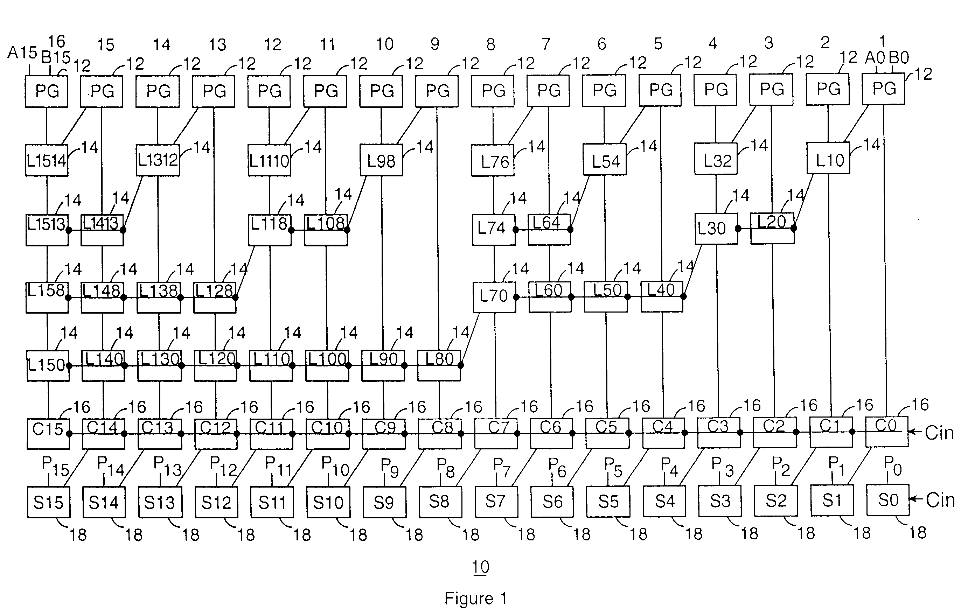

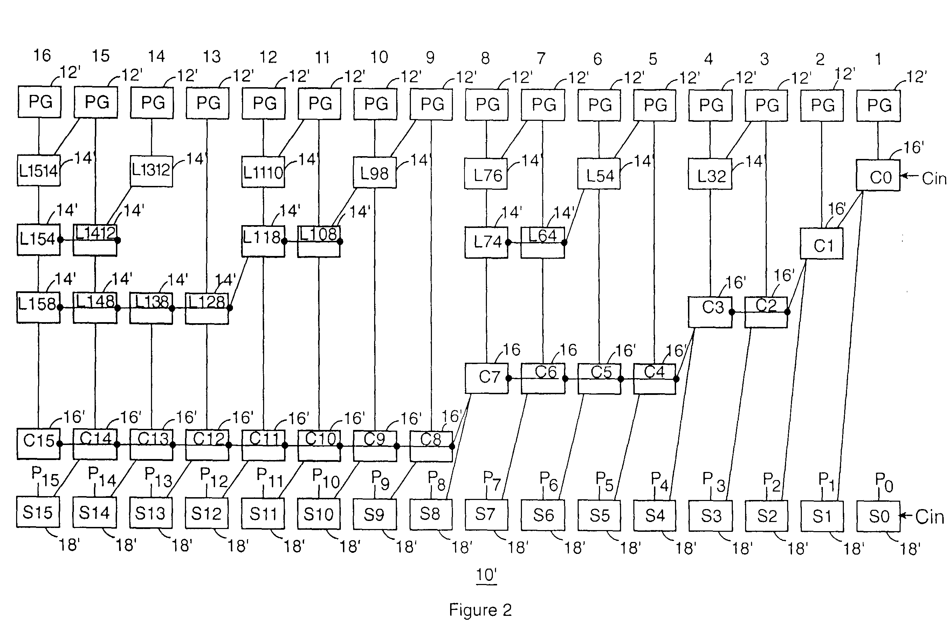

To more particularly describe the operation of the present invention in the context of a particular embodiment, its use in a carry lookahead (CLA) binary adder is described hereinbelow. However, it would be obvious to one of ordinary skill in the art, that although the present invention will be described in light of this embodiment, many types of circuits can utilize the concepts described hereinbelow and their use would be within the spirit and scope of the present invention. To better understand the problems with the RC delay in an adder that includes a carry lookahead structure, refer now to the following discussion in conjunction with Figures 1 and 2.

Figure 1 is a first embodiment of a conventional sixteen (16) bit carry lookahead (CLA) binary adder 10. As is well known, the (CLA) binary adder 10 comprises a plurality of propagate/generate (PG) cells 12 which receive A and B input for each bit position. Each of the associated lookahead (L) cells 14 are coupled to a PG cell 12. Each of the plurality of L cells 14 represents the lookahead from one bit position to another, i.e., L32 is the lookahead from bit position 2 to bit position 3, L54 is the lookahead from bit position 4 to bit position 5, etc. Each of a plurality of carry (C) cells 16 are coupled to the associated L cells 14. Each of a plurality of sum (S) cells 18 are coupled to an associated PG cell 12 and to an associated C cell 16. The Cᵢₙ signal is coupled in parallel to the carry (C) cells 16.

The different cells 12, 14, 16 and 18 can be implemented in a variety of ways. Please find below a table showing one embodiment of the various functions implemented within each of these cells:

| | | |
|---|---|---|
| PG cell 12 | Propagate (P) = | Aᵢ XOR Bᵢ; |
| | Generate (G) = | Aᵢ · Bᵢ |
| L cell 14 | Group Propagate = | GPᵢ · GPᵢ₋₁ |
| | Group Generate = | GGᵢ + (GPᵢ · GGᵢ₋₁) |
| C cell 16 | | = GGᵢ & GPᵢ · Cᵢₙ |
| S cell 18 | | = Pᵢ XOR Cᵢ₋₁, where Pᵢ is generated in the 1st stage. |

As one of ordinary skill in the art will readily recognize, all of the above-identified functions can be implemented via a number of different types of logic gates.

The conventional 16 bit CLA binary adder 10 provides a fan-out at a power of 2 bit boundaries. Hence, at bit 2, the fan from L10 cell is L20 and L30 (2 lookaheads) the fanout from L30 is L40, L50, L60 and L70 (4 lookaheads). At bit 8, the fanout from L70 is L80, L90, L100, L110, L120, L130, L140, L160 (eight lookaheads).

As can be seen, as the binary adder 10 becomes larger, the fanout at each succeeding power of two boundary increases. Accordingly, as the adder becomes larger, more lookahead cells are required and therefore more RC delay is introduced.

Figure 2 is a second embodiment of a 16 bit CLA binary adder 10'. In this embodiment, it is seen that since the C cells 16 include some lookahead information some of the lookahead cells 14 can be eliminated. However, even with this type of adder 10', there is still the fan-out required for power of two boundaries that add significantly to RC delay.

The present invention overcomes these problems by providing for the duplication of a cell at a boundary, in this case at the power of two bit boundary. In a preferred embodiment, this cell, hereinafter called the fast cell, is then utilized to drive the next boundary cell or cells. In so doing, the RC delay of the output signals of the cell at the first boundary location are reduced as the fanout is now two.

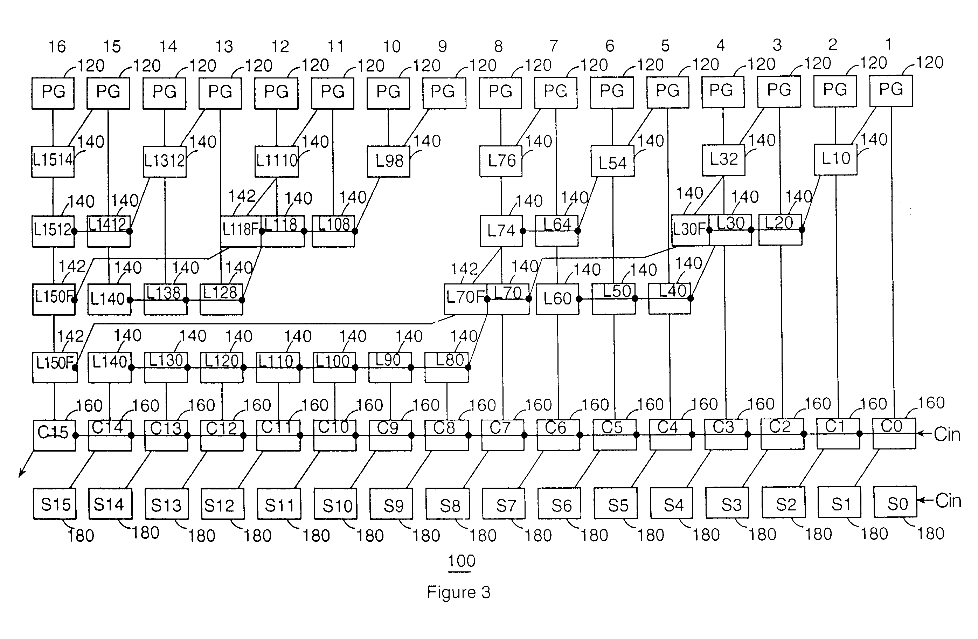

To more particularly explain the advantages of the present invention, refer now to Figures 3-5 in conjunction with the following discussion.

Figures 3 - 5 are diagrams of 16 bit CLA binary adders in accordance with the present invention. It should be understood that although the present invention will be discussed in the context of a 16 bit binary adder, a variety of sizes and types of adders could be utilized and their use would be within the spirit and scope of the present invention.

Figure 3 is a first embodiment of a 16 bit CLA binary adder 100 in accordance with the present invention. Similar to the CLA binary adder of Figure 1, the CLA binary adder 100 comprises a plurality of PG cells 120 which receives A and B inputs at each bit position. There are also a plurality of lookahead (L) cells 140, each of which is coupled to a PG cell 120. The L cells 140, similar to L cells 14 and 14' of Figures 1 and 2 represent the lookahead from one bit position to the next. There are also a plurality of carry (C) cells 160, each of which is coupled to an associated L cells 140. Finally, there is a plurality of sum (S) cells 180, each of which is coupled to receive a propagate signal from an associated PG cell 120 and coupled to an associated C cell 160. The Cᵢₙ signal is coupled in parallel to the C cells 160. The different cells 120, 140, 160 and 180 can be implemented in a variety of ways. However, for purposes of the following discussion, cells 120-180 have the same functionality as the cells 12-18 of Figure 1. Accordingly, at bit 4, a power of two boundary, the functionality of cell 140 designated as L30 is copied as a cell 142 designated as L30F. L30F or the fast cell 142 is utilized to drive both the lookahead cell 140 and the copied fast cell 142 at the next power of two boundary bit 8 (L70 and L70F). In this embodiment, L70F is utilized to drive the lookahead at the next power of the two boundary (bit 16). This system provides the fastest carry (C15).

Accordingly, in most instances, a lookahead or carry cell with a high fanout requirement will be copied and then either the copy or the original cell will drive a subset of cells of the high fanout requirement. It is also readily apparent that at the most significant bit boundary (i.e. L150F), there is no need to produce a copy of the original cell, because at that bit there is no high fanout requirement.

In some instances, a faster sum may be desired. Accordingly, at the lookahead cell 140 which has a high fanout requirement, in this embodiment, the fast cells 142 could be utilized to drive one portion of the lookahead subsequent cells 140 and the original cell 140 could drive the other portion of the subsequent lookahead cells 140 and 142.

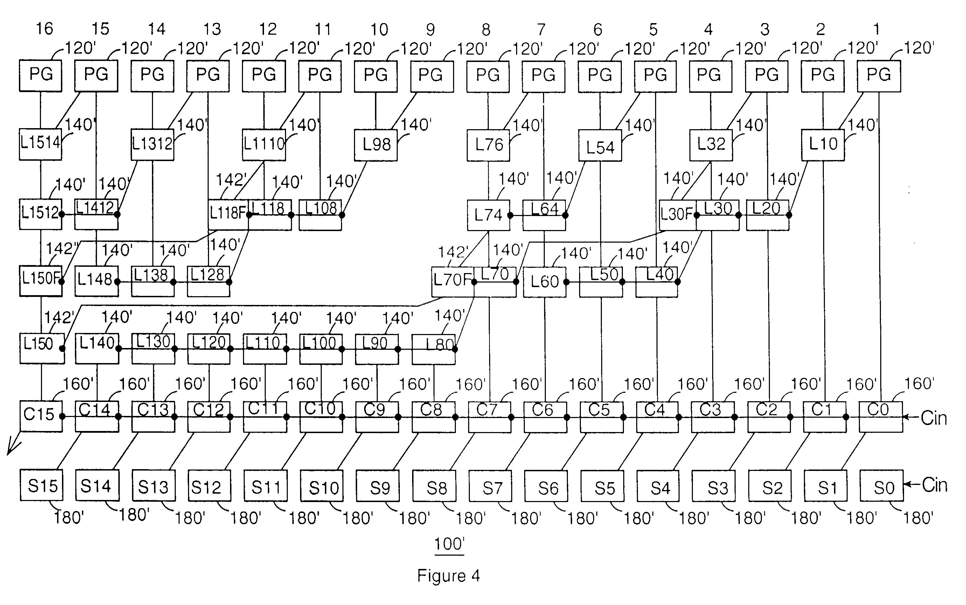

Referring now to Figure 4 which is a second embodiment of CLA binary adder 100' in accordance with the present invention, the S cells 180' (S8-S15) are accelerated by lookahead cell 140' L70 driving L80-L110, L70F driving L120, L130, L140 and L150F, L118 driving L138, L128 and L118F driving L148 and L158F. Therefore, in this embodiment the RC delay can be split in half by driving half the fanout with the fast cells and half with the original cells.

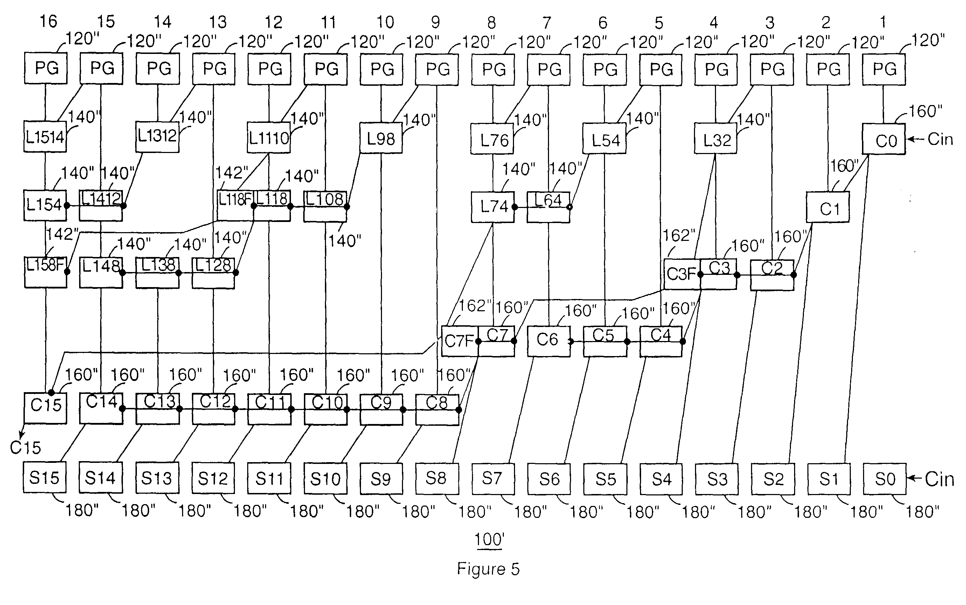

Referring now to Figure 5, what is shown is a third embodiment of a 16 bit CLA binary adder 100" in accordance with the present invention. The cells 120"-180" of the CLA binary adder 100" is similar to the cells 120-180 of the CLA binary adder 100. In this embodiment, fast cells 162" and 142" are copied from the C cells 160" (C3F; C7F) and the L cells 140" (L118F and L158F) respectively, at certain power of two boundaries to drive the C cells 160" and 162", and the L cells 140" and 142" at the next power of two boundary. In addition, as described above with respect to Figure 4, the RC delay at the last cell with a high fanout requirement can be reduced by driving a portion of the fanout with the fast cell and a portion of the fanout with the slow cell.

Although the present invention has been described in terms of the copy of the lookahead or carry cell driving the cells with a low fanout requirement, one of ordinary skill in the art will readily recognize that the original cell could drive the cell with the low fanout requirement and the copy could drive the cell with the high fanout requirement.

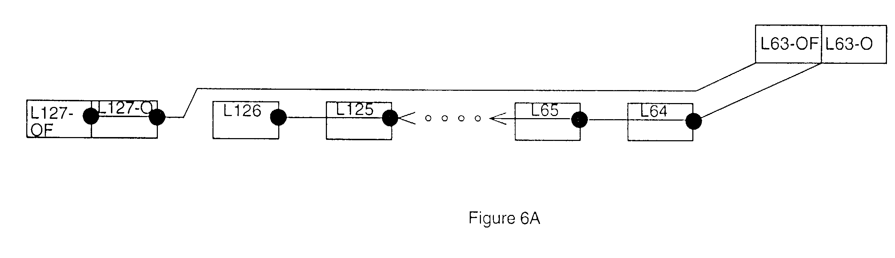

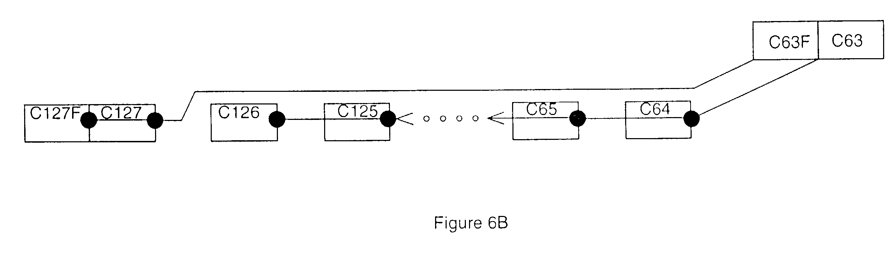

The present invention has an additional utility as the bit width of the devices becomes significantly larger. Figures 6A and 6B illustrate the application of this technique to the 64 fanout subcircuit of a 128 bit adder. Please note that the total loading on the carry chain is actually increased slightly. This does not degrade performance as the additional load is applied to the fast-lookahead and fast-carry signals instead of the heavy loaded slow-lookahead and slow-carry signals. In this embodiment, the L63 and C63 cells in a 128 bit adder implementation will now be copied. Cells L63F and C63F will each drive fanouts of 2, L127 and L127F and C127 and C127F respectively, while the original L63 and C63 will drive fanouts of 63 and 64, respectively. This technique can be applied to all high fanout cells in the lookahead tree. This greatly reduces the RC delay at each stage of the adder with only a small percentage increase in the number of transistors.

Since the fast-lookahead signal and the fast-carry signal out of one stage of the adder is used to gate both the fast and slow lookahead/carry signals at the next power of the two boundary, the fast and slow paths are accelerated. This prevents the fast path from arriving much earlier than the slowest path. Thus, this design keeps each stage of the lookahead logic and carry logic synchronized in time. Prior designs would construct a separate unit to accelerate the carry logic without the loading on the carry chain created by the need to produce intermediate carry signals for sum generation. This would only solve the need to produce a faster carry signal out of the adder and would not accelerate the production of the sum signals. This approach accelerates both the carry generation and the sum generation.

Accordingly, an adder in accordance with the present invention has significantly less RC delay than known carry lookahead adders and through the creation of a fast cell which drives the next lookahead location, fanout is greatly reduced.

As has been before discussed, although the present invention has been described specifically with reference to CLA binary adder, one of ordinary skill in the art readily recognizes that the present invention could be utilized in a variety of circuits and that use would be within the spirit and scope of the present invention.

Although the present invention has been described in accordance with the embodiments shown, one of ordinary skill in the art will readily recognize that there could be variations to the embodiments and those variations would be within the spirit and scope of the present invention. Accordingly, many modifications may be made by one of ordinary skill in the art without departing from the spirit and scope of the appended claims.

## Claims

1. A circuit comprising:
a plurality of cells; the plurality of cells being separated into a first group of cells having a high fanout requirement and a second group of cells having a higher speed capability;
a copy of at least one cell from the first group of cells; and
means for coupling either one of the at least one cell and the copy to the second group of cells having the higher speed capability

2. The circuit of claim 1 in which each of the plurality of cells comprises a lookahead cell.

3. The circuit of claim 1 in which each of the plurality of cells comprises a carry cell.

4. The circuit of claim 1 in which the circuit comprises an adder circuit.

5. The circuit of claim 4 in which the adder circuit comprises a carry lookahead (CLA) binary adder circuit.

6. The circuit of claim 5 in which each of the plurality of cells comprises a lookahead cell.

7. The circuit of claim 6 in which the first group of lookahead cells are located on a power of two bit boundary of the circuit.

8. The circuit of claim 7 in which the copy of at least one lookahead cell from the first group being coupled to a lookahead cell in the second group which is a subset of the high fanout requirement.

9. A carry lookahead (CLA) adder comprising:
a plurality of propagate/generate (PG) cells;
a plurality of lookahead (L) cells, each of the plurality of L cells being coupled to an associated one of the plurality of PG cells; at least one of the L cells being a copy of a L cell with a high fanout requirement; either one of the L cell and the copy driving a L cell which does not have a high fanout requirement; and the other one of the L cell and the copy driving the high fanout requirement;
a plurality of carry (C) cells; each of the plurality of C cells being coupled to an associated one of the plurality of L cells; and
a plurality of sum (S) cells; each of the plurality of S cells being coupled to an associated one of the plurality of C cells and to an associated one of the plurality of PG cells.

10. The CLA adder of claim 9 in which the at least one of a L cells are located on a power of two bit boundary of the adder.

11. The CLA adder of claim 10 in which the copy of the at least one cell being coupled to an L cell which is a subset of the high fanout requirement.
